# EUROPÄISCHE PATENTANMELDUNG

(11) **EP 1 245 444 A1**
(43) Veröffentlichungstag der Anmeldung: **02.10.2002**
(21) Anmeldenummer: 01108221.1
(22) Anmeldetag: 31.03.2001
(51) Int. Cl.: B60Q 3/02

(54) **Fahrzeugsitz mit integrierter Leseleuchte**

(71) Anmelder: SIDLER GMBH & CO, D-72072 Tübingen (DE)
(72) Erfinder: Merz, Bernd, 72636 Frickenhausen (DE)
(74) Vertreter: KOHLER SCHMID + PARTNER

(57) **Zusammenfassung**

Bei einem Fahrzeugsitz (4) eines Kraftfahrzeugs ist in die Rückseite (2, 11) der Kopfstütze (3) oder der Rückenlehne des Fahrzeugsitzes (4) eine Leseleuchte (1) integriert. Durch diese Leseleuchte für den Fond-Passagier des Kraftfahrzeugs ist eine Blendung des Fahrers vollständig ausgeschlossen.

## Beschreibung

Die Erfindung betrifft einen Fahrzeugsitz eines Kraftfahrzeugs.

Leseleuchten für die Fondpassagiere in Kraftfahrzeugen werden meist mittig im Dachhimmel plaziert. Es sind auch Leuchten bekannt, die seitlich im Bereich von oberen Haltegriffen angeordnet sind. Leuchten in diesen Positionen haben meist den Nachteil, daß sowohl die Fondpassagiere sowie über den Rückspiegel auch der Fahrer mehr oder weniger stark geblendet werden, da ein direkter Blick auf die Lichtaustrittsfläche der Leseleuchte möglich ist.

Demgegenüber ist es die Aufgabe der Erfindung, eine Beleuchtung für den Fondpassagier eines Kraftfahrzeugs bereitzustellen, bei der eine Blendung des Fahrers vollständig ausgeschlossen ist.

Diese Aufgabe wird erfindungsgemäß gelöst durch einen Fahrzeugsitz eines Kraftfahrzeugs mit einer in die Rückseite des Fahrzeugsitzes integrierten Leseleuchte.

Durch die erfindungsgemäße Anordnung einer Leseleuchte im Fahrzeugsitz ist der direkte Einblick in die Leseleuchte zumindest durch den Fahrer sicher verhindert.

Vorzugsweise ist die Leseleuchte in der Rückseite der Kopfstütze oder der Rückenlehne des Fahrzeugsitzes vorgesehen. Damit auch der Fondpassagier durch die Leseleuchte möglichst wenig geblendet wird, ist eine Plazierung der Leseleuchte unterhalb der Augenhöhe des Fondpassagiers besonders vorteilhaft. Eine besonders geeignete Position der Leseleuchte ist in der Rückseite der Kopfstütze des Fahrzeugsitzes, denn diese Position ist vom Fahrer nicht einsehbar und hoch genug angeordnet, um eine homogene Ausleuchtung der Leseebene des Fondpassagiers zu gewährleisten.

Bei vorteilhaften Ausführungsformen der Erfindung ist die Leseleuchte aus der Kopfstütze bzw. der Rückenlehne herausbewegbar, insbesondere herausklappbar, wobei die Leseleuchte in ihrer nicht herausbewegten Position möglichst bündig mit der Ebene der Rückseite der Kopfstütze bzw. der Rückenlehne abschließt. Zum Ein- und Ausschalten der Leseleuchte kann mit dem Bewegungsmechanismus der Leseleuchte ein Schalter gekoppelt sein, so daß ein externer Schalter für die Leseleuchte nicht erforderlich ist.

Bevorzugt ist die Lichtaustrittsfläche der Leseleuchte in Richtung auf den Fondpassagier durch einen Blendenabschnitt abgedeckt, um die Lichtaustrittsfläche vor dem Fondpassagier zu verbergen. Dieser Blendenabschnitt kann sowohl fest als auch beweglich (z.B. auf- und zuklappbar) ausgeführt sein.

Wenn die Haltestangen der Kopfstütze elektrisch leitend sind, können sie als stromführende Teile des Stromkreises zur Stromversorgung der Leseleuchte genutzt werden. Alternativ können innerhalb der Haltestangen der Kopfstütze Stromkabel zur Stromversorgung der Leseleuchte verlegt sein.

Die Erfindung betrifft auch eine Leuchtenanordnung für den Fondpassagier eines Kraftfahrzeugs, wobei die Leseleuchte in der Rückseite eines Fahrzeugsitzes, insbesondere in der Kopfstütze oder der Rückenlehne des Fahrzeugsitzes, angeordnet ist.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigt:
- Fig. 1: einen erfindungsgemäßen Fahrzeugsitz mit integrierter Leseleuchte in ihrer zugeklappten Position; und
- Fig. 2: den erfindungsgemäßen Fahrzeugsitz mit integrierter Leseleuchte in ihrer aufgeklappten Position.

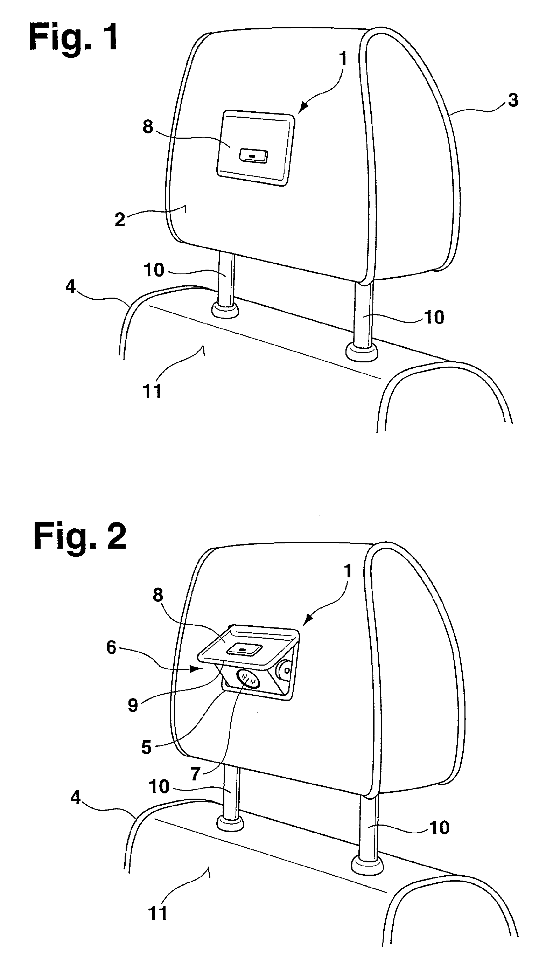

Die in Fig. 1 insgesamt mit **1** bezeichnete Leseleuchte ist in der Rückseite **2** der Kopfstütze **3** des Fahrzeugsitzes **4** eines Kraftfahrzeugs unterhalb der Augenhöhe des Fondpassagiers vorgesehen. Die Leseleuchte 1 ist mit einem Rahmen **5** (Fig. 2) in einer nach hinten offenen Öffnung der Kopfstütze 3 befestigt. In der Rahmenöffnung ist ein Schwenkteil **6** um ca. 45° hochklappbar gelagert, an dessen Unterseite sich die Lichtaustrittsfläche **7** der Leseleuchte 1 befindet. Bei zugeklapptem Schwenkteil 6 ist der Rahmen 5 durch eine nahezu bündig mit der Ebene der Rückseite 2 der Kopfstütze 3 abschließende Klappe **8** des Schwenkteils 6 verdeckt. Bei aufgeklapptem Schwenkteil 6 bildet der untere Rand der Klappe 8 einen Blendenabschnitt **9**, der die Lichtaustrittsfläche 7 in Richtung auf den Fondpassagier abgedeckt. Ein Schalter (nicht gezeigt) zum Ein- und Ausschalten der Leseleuchte 1 wird durch das Schwenkteil 6 ausgelöst, so daß die Leseleuchte 1 durch Aufklappen des Schwenkteils 6 eingeschaltet und durch Zuklappen des Schwenkteils 6 bis zur Anlage an den Rahmen 5 ausgeschaltet wird.

Besonders vorteilhaft erfolgen das Aus- und Einfahren des Schwenkteils 6 mittels Federantrieb, Push-Push-Mechanismus und Dämpfungselement. Durch leichten Fingerdruck (1.Push-Bewegung) auf die geschlossene Klappe 8 wird das Schwenkteil 6 entriegelt und schwenkt durch den Federantrieb automatisch auf, wobei diese Bewegung durch das Dämpfungselement gebremst wird. Durch Zuschwenken der Klappe 8 (2.Push-Bewegung) in Anlage an den Rahmen 5 gegen die Wirkung des Federantriebs wird die Klappe 8 geschlossen und dabei wieder verriegelt.

Die Haltestangen **10** der Kopfstütze 3 können, wenn sie elektrisch leitend sind, einen Teil des Stromkreises zur Stromversorgung der Leseleuchte 1 bilden. Alternativ können innerhalb der Haltestangen 10 der Kopfstütze 3 auch Stromkabel zur Stromversorgung der Leseleuchte 1 verlegt sein.

Statt in der Kopfstütze 3 kann die Leseleuchte 1 auch in der Rückseite **11** der Rückenlehne des Fahrzeugsitzes 4 vorgesehen sein.

## Patentansprüche

1. Fahrzeugsitz (4) eines Kraftfahrzeugs mit einer in die Rückseite (2, 11) des Fahrzeugsitzes (4) integrierten Leseleuchte (1).

2. Fahrzeugsitz nach Anspruch 1, **dadurch gekennzeichnet, daß** die Leseleuchte (1) in der Rückseite (2, 11) der Kopfstütze (3) oder der Rückenlehne des Fahrzeugsitzes (4) vorgesehen ist.

3. Fahrzeugsitz nach Anspruch 1 oder 2, **dadurch gekennzeichnet, daß** die Leseleuchte (1) aus der Kopfstütze (3) bzw. der Rückenlehne nach hinten herausbewegbar, insbesondere herausklappbar ist.

4. Fahrzeugsitz nach Anspruch 3, **dadurch gekennzeichnet, daß** die Leseleuchte (1) in ihrer nicht herausbewegten Position bündig mit der Ebene der Rückseite (2, 11) der Kopfstütze (3) bzw. der Rückenlehne abschließt.

5. Fahrzeugsitz nach Anspruch 3 oder 4, **dadurch gekennzeichnet, daß** ein Schalter zum Ein- und Ausschalten der Leseleuchte (1) mit dem Bewegungsmechanismus der Leseleuchte (1) gekoppelt ist.

6. Fahrzeugsitz nach einem der vorhergehenden Ansprüche,
**dadurch gekennzeichnet, daß** die Lichtaustrittsfläche (7) der Leseleuchte (1) in Richtung auf den Fondinsassen durch einen Blendenabschnitt (9) abgedeckt ist.

7. Fahrzeugsitz nach einem der vorhergehenden Ansprüche,
**dadurch gekennzeichnet, daß** die Haltestangen (10) der Kopfstütze (3) elektrisch leitend und Teil des Stromkreises zur Stromversorgung der Leseleuchte (1) sind.

8. Fahrzeugsitz nach einem der Ansprüche 1 bis 6, **dadurch gekennzeichnet, daß** innerhalb der Haltestangen (10) der Kopfstütze (3) Stromkabel zur Stromversorgung der Leseleuchte (1) verlegt sind.

9. Leuchtenanordnung für den Fondpassagier eines Kraftfahrzeugs, mit einer Leseleuchte (1),
**dadurch gekennzeichnet,**
**daß** die Leseleuchte (1) in der Rückseite (2, 11) eines Fahrzeugsitzes (4), insbesondere in der Kopfstütze (3) oder der Rückenlehne des Fahrzeugsitzes (4), angeordnet ist.
